# EUROPÄISCHE PATENTSCHRIFT

(11) **EP 0 707 142 B1**
(45) Veröffentlichungstag und Bekanntmachung des Hinweises auf die Patenterteilung: **27.01.1999**
(21) Anmeldenummer: 95810616.3
(22) Anmeldetag: 03.10.1995
(51) Int. Cl.: F02M 25/07

(54) **Verfahren und Vorrichtung zur hochdruckseitigen Abgasrezirkulation einer aufgeladenen Brennkraftmaschine**
Method of and device for recirculating exhaust gas to the high pressure side of a supercharged combustion engine
Procédé et dispositif pour recirculer des gaz d'échappement vers le côté haute pression d'un moteur à combustion suralimenté

(30) Priorität: 14.10.1994 DE 4436732
(43) Veröffentlichungstag der Anmeldung: 17.04.1996
(73) Patentinhaber: ASEA BROWN BOVERI AG, 5400 Baden (CH)
(72) Erfinder: Codan, Ennio, Dr., CH-5212 Hausen bei Brugg (CH); Hörler, Hansulrich, Dr., CH-8046 Zürich (CH); Stebler, Hansruedi, CH-4208 Nunningen (CH); Widenhorn, Markus, CH-8955 Oetwil (CH)

(56) Entgegenhaltungen:
- EP-A- 0 080 327
- EP-A- 0 192 219
- EP-A- 0 620 365
- WO-A-94/29587
- DE-C- 4 231 218
- US-A- 4 496 291
- PATENT ABSTRACTS OF JAPAN vol. 17 no. 392 (M-1450) ,22.Juli 1993 & JP-A-05 071426 (MITSUBISHI) 23.März 1993,
- MTZ MOTORTECHNISCHE ZEITSCHRIFT, Bd. 53, Nr. 3, 1.März 1992 STUTTGART, Seiten 114-121, XP 000249351 EITEL 'Ladeluftkühlung mit Niedertemperatur-Kühlmittelkreislaufen für Kraftfahrzeug-Verbrennungsmotoren'
- PATENT ABSTRACTS OF JAPAN vol. 9 no. 139 (M-387) [1862] ,14.Juni 1985 & JP-A-60 019916 (MAZDA) 1.Februar 1985,
- PATENT ABSTRACTS OF JAPAN vol. 950 no. 004 & JP-A-07 091325 (JIDOSHA BUHIN KOGYO KK;OTHERS: 01) 4.April 1995,

## Beschreibung

### Technisches Gebiet

Die Erfindung betrifft ein Verfahren und eine Vorrichtung zur hochdruckseitigen Abgasrezirkulation einer mit einem Turbolader kombinierten Brennkaftmaschine.

### Stand der Technik

Die Abgasrezirkulation auf der Hochdruckseite einer aufgeladenen Brennkaftmaschine mit negativem Spülgefälle, d.h. mit kleinem Ladeluftdruck gegenüber höherem Abgasgegendruck nach dem Zylinder, wird durch einfaches Verbinden des Abgasleitungssystems mit dem Ladeluftleitungssystem realisiert. Bei positivem Spülgefälle ist eine solche Verbindung jedoch wesentlich komplizierter, da das Druckgefälle in umgekehrter Richtung überwunden werden muss.

Aus der DE-C1 42 09 469 ist eine Brennkraftmaschine mit Abgasturbolader bekannt, welche die Abgasrückführung bei negativem und vor allem auch bei positivem Spülgefälle ermöglicht. Zur Überwindung des Druckgefälles gegenüber dem Ladeluftdruck ist bei dieser Lösung die Turbine des Abgasturboladers so ausgebildet, das sie einen Teil der Abgase der Brennkaftmaschine verdichtet. Die verdichteten Abgase werden über eine Abgasrückführleitung zwischen dem Ladeluftkühler und dem Verdichter des Abgasturboladers in die Einlassleitung der Brennkaftmaschine eingeleitet.

Diese Lösung erfordert jedoch eine komplizierte, speziell ausgebildete Turbine mit integriertem Abgasverdichterteil. Daher ist es nicht möglich, handelsübliche Abgasturbolader zu verwenden. Weil die erforderliche Verdichtungsenergie mit der Ansaugtemperatur ansteigt und ein in die Turbine integriertes Abgasverdichterteil nicht optimal ausgelegt werden kann, wird für eine derartige Verdichtung ein sehr hoher Energieaufwand benötigt. Dadurch verringert sich der erreichbare Wirkungsgrad der Abgasrezirkulation.

Mit der DE-A1 43 20 045 ist eine aufgeladene Brennkraftmaschine bekannt, bei welcher die o.g. Nachteile weitgehend beseitigt wurden. Dazu sind die Abgase in mehrere Abgasströme aufgeteilt. Der erste Abgasstrom wird in die Abgasturbine des Abgasturboladers geleitet. Ein zweiter Abgasstroms wird in einer separaten Abgasleitung zur Brennkraftmaschine zurückgeführt. Dabei wird er vor seinem Eintritt in die Brennkraftmaschine zunächst gekühlt und anschliessend wieder verdichtet. Zur Begrenzung des Ladedruckes wird ein dritter Abgasstrom über eine Umgehungsleitung direkt ins Abgassystem abgeführt.

Das ungenutzte Abführen eines Teils der Abgase hat jedoch einen Energieverlust zur Folge, der den möglichen Wirkungsgrad der Abgasrezirkulation senkt. Nachteilig wirkt sich bei dieser Lösung ausserdem aus, dass der Verdichter für den zweiten Abgasstrom von der Brennkraftmaschine angetrieben wird. Dadurch wird deren Wirkungsgrad gesenkt. Der Antrieb des Verdichters erfolgt über ein mit der Kurbelwelle der Brennkraftmaschine verbundenes separates Getriebe, welches den technischen Aufwand für die Abgasrezirkulation und damit auch die Kosten wesentlich erhöht. Durch die Vielzahl von Steuerventilen und das dazu erforderliche Regelsystem wird der Aufwand zusätzlich vergrössert. Zudem liefert der mechanische, an die Kurbelwelle gekoppelter Abgasverdichter eine Abgasmenge, die im allgemeinen nicht proportional zu der von der Brennkraftmaschine angesaugten Luftmenge ist. Um auch bei sich ändernden Lasten eine konstante Abgasrückführrate zu realisieren, ist ein stark korrigierendes und damit aufwendiges Regelsystem erforderlich.

Aus der JP-A-5 071 426 ist ein Verfahren zur hochdruckseitigen Abgasrezirkulation einer aufgeladenen Brennkraftmaschine bekannt. bei welchem die Abgase der Brennkraftmaschine in drei Abgasströme aufgeteilt werden. Dabei wird der erste Abgasstrom in der Abgasturbine entspannt und somit der Verdichter des Abgasturboladers angetrieben. Der zweite Abgasstrom wird zunächst gekühlt. danach verdichtet und schliesslich rezirkuliert, d.h. erneut in die Brennkraftmaschine eingeleitet. Dagegen wird der dritte Abgasstrom separat vom ersten entspannt und erbringt die Leistung zur Verdichtung des zweiten Abgasstroms.

Die entsprechende Vorrichtung besteht aus zwei mit der Brennkraftmaschine sowohl über ein Ladeluft- als auch über ein Abgasleitungssystem verbundenen Abgasturboladern. Das Abgasleitungssystem weist drei Abgasleitungen auf. wobei die erste mit der Abgasturbine des ersten Abgasturboladers verbunden ist. Die zweite und dritte Abgasleitung sind am zweiten Abgasturbolader. d.h. an dessen Abgasverdichter bzw. an der Abgasturbine angeschlossen. Stromauf des Abgasverdichters ist in der zweiten Abgasleitung ein Abgaskühler angeordnet. Die Abgasturbine des zweiten Abgasturboladers ist als Antrieb für dessen Abgasverdichter ausgebildet.

Bei diesem Verfahren und der entsprechenden Vorrichtung muss im Abgasverdichter des zweiten Abgasturboladers ein relativ grosses Abgasvolumen komprimiert werden. Zudem weist der dritte Abgasstrom verhältnismässig grosse Druckverhältnisse auf. Daher ergibt sich ein Verhältnis der Turbinenfläche zu Verdichtervolumenstrom. welches mit Standard-Turboladern nicht realisiert werden kann.

Mit der EP-A-192 219 sind ebenfalls ein Verfahren und eine Vorrichtung zur hochdruckseitigen Abgasrezirkulation einer aufgeladenen Brennkraftmaschine bekannt. Bei dieser Lösung werden die Abgase der Brennkraftmaschine lediglich in zwei Abgasströme aufgeteilt. In der ersten Abgasleitung ist stromab der Abgasturbine ein Regelventil angeordnet, welches den Zustrom zum Verdichter des zweiten Abgasturboladers regelt.

### Darstellung der Erfindung

Die Erfindung versucht, all diese Nachteile zu vermeiden. Ihr liegt die Aufgabe zugrunde, ein relativ einfaches, kostengünstiges Verfahren mit verbessertem Wirkungsgrad sowie eine entsprechende Vorrichtung zur hochdruckseitigen Abgasrezirkulation einer turboaufgeladenen Brennkraftmaschine zu schaffen, wobei sowohl das Verfahren als auch die Vorrichtung unter Verwendung handelsüblicher Turbolader realisiert werden sollen.

Erfindungsgemäss wird dies durch ein Verfahren erreicht, bei dem verdichtete und gekühlte Ladeluft in die Brennkraftmaschine eingeleitet wird und deren Abgase in mehrere Abgasströme aufgeteilt werden. Ein erster Abgasstrom wird in einer Abgasturbine entspannt und treibt damit einen Verdichter eines Abgasturboladers an. Dagegen wird ein zweiter Abgasstrom zunächst gekühlt. danach verdichtet und schliesslich rezirkuliert. d.h. in die Brennkraftmaschine eingeleitet. Ein dritter Abgasstrom der Brennkraftmaschine wird separat vom ersten Abgasstrom entspannt und erbringt somit die Leistung zur Verdichtung des zweiten Abgasstroms. Es werden zumindest zwei Verdichtungs- bzw. Entspannungsvorgänge des zweiten bzw. des dritten Abgasstroms durchgeführt, wobei die Verdichtungsvorgänge parallel zueinander und die Entspannungsvorgänge in Reihe hintereinander ablaufen.

Dazu wird ein Verdichter eines Abgasturboladers über eine Ladeluftleitung mit der Brennkraftmaschine verbunden, wobei in der Ladeluftleitung ein Ladeluftkühler angeordnet ist. Stromab der Brennkraftmaschine ist ein sich verzweigendes Abgasleitungssystem ausgebildet. Letzteres besteht aus drei Abgasleitungen. von denen die erste mit einer Abgasturbine des Abgasturboladers und die zweite mit einem Abgaskühler sowie einem Abgasverdichter verbunden ist. Letzterer weist einen Antrieb auf und ist über eine Abgasrückführleitung mit der Ladeluftleitung verbunden. Als Antrieb des Abgasverdichters ist eine mit der dritten Abgasleitung verbundene Turbine angeordnet. In der zweiten Abgasleitung sind zumindest zwei Abgasverdichter angeordnet, wobei jeder Abgasverdichter mit einer Turbine zu einem Turbolader verbunden ist. Die Abgasverdichter sind parallel und die Turbinen in Reihe geschaltet.

Bei diesem Verfahren bzw. mit der entsprechenden Vorrichtung wird der Wirkungsgrad der Abgasrezirkulation erhöht, weil kein Teil der Abgase das System ungenutzt verlässt. Das System dieser Abgasrezirkulation besitzt eine Charakteristik, die nahezu konstante Abgasrückführraten ergibt, so dass allenfalls kleine Regeleingriffe erforderlich werden. Dadurch wird das System energetisch effizienter und auch die Ladungswechselarbeit der Brennkraftmaschine verbessert sich.

Die Umsetzung des Energieüberschusses in einer zweiten und in einer dazu in Reihe geschalteten dritten Turbine ist wesentlich effizienter als die Nutzung der Druckdifferenz im Zylinder der Brennkraftmaschine. Deshalb lässt sich mit diesem Verfahren der Gesamtbrennstoffverbrauch deutlich senken.

Für die Auslegung eines Turboladers ist das Verhältnis der Turbinenfläche zum Verdichtervolumenstrom entscheidend. Die besondere Anordnung der Turbolader bewirkt eine entsprechende Aufteilung des relativ grossen Volumens des zweiten Abgasstroms im Bereich vor der Verdichtung. Ebenso werden die grossen Druckverhältnisse des dritten Abgasstroms bei der Entspannung wesentlich verringert. Aus diesem Grund stellt sich ein normales Verhältnis der Turbinenfläche zum Verdichtervolumenstrom ein. Damit ist der wesentliche Vorteil verbunden, dass handelsübliche Turbolader verwendbar sind. Weil die Turbinen und Verdichter solcher Turbolader hinsichtlich ihrer Laufzahl aufeinander abgestimmt sind, können sie in Gebieten mit besserem Wirkungsgrad betrieben werden.

### Kurze Beschreibung der Zeichnung

In der Zeichnung ist ein Ausführungsbeispiel der Erfindung anhand einer aufgeladenen Brennkraftmaschine dargestellt. Es zeigen:
- Fig. 1: eine schematische Darstellung einer Lösung des Standes der Technik zur Abgasturboaufladung einer Brennkraftmaschine, mit Abgasrezirkulation;
- Fig. 2: eine Darstellung der erfindungsgemässen Lösung zur Abgasturboaufladung einer Brennkraftmaschine, mit Abgasrezirkulation.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

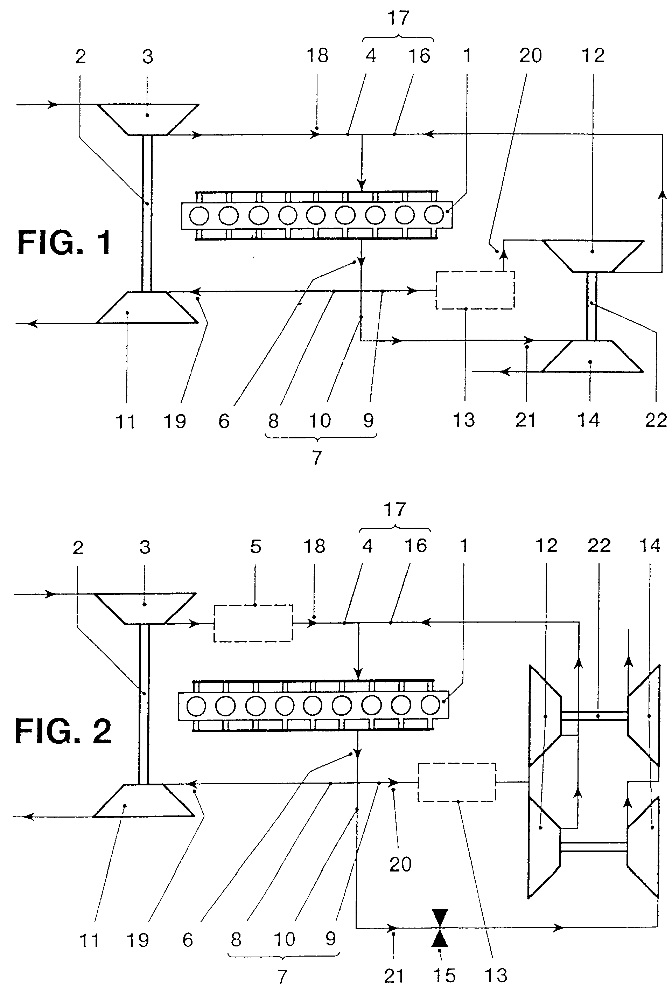

Figur 1 zeigt eine Lösung des Standes der Technik. bei der die Brennkraftmaschine 1 hochdruckseitig mit einem Abgasturbolader 2 verbunden ist. Der Verdichter 3 des Abgasturboladers 2 ist über eine Ladeluftleitung 4 an der Brennkraftmaschine 1 angeschlossen.

Stromab der Brennkraftmaschine 1 und von dieser mit Abgas 6 beaufschlagt, ist ein sich verzweigendes Abgasleitungssystem 7 ausgebildet, welches aus drei Abgasleitungen 8, 9, 10 besteht. Die erste Abgasleitung 8 ist mit der Abgasturbine 11 des Abgasturboladers 2 und die zweite Abgasleitung 9 mit einem Abgasverdichter 12 verbunden. In der zweiten Abgasleitung 9 ist ein Abgaskühler 13 angeordnet. Als Antrieb 14 des Abgasverdichters 12 ist eine zusätzliche Turbine ausgebildet, mit der die dritte Abgasleitung 10 verbunden ist.

Stromauf der Brennkraftmaschine 1 ist ein aus der Ladeluftleitung 4 und einer Abgasrückführleitung 16 bestehendes Ladeluftleitungssystem 17 ausgebildet.

Beim Betrieb der Vorrichtung wird im Verdichter 3 aufgeladene Ladeluft 18 in die Brennkraftmaschine 1 eingeleitet. Nach der Verbrennung werden die Abgase 6 der Brennkraftmaschine 1 im Abgasleitungssystem 7 in drei Abgasströme 19, 20, 21 unterteilt. Der erste Abgasstrom 19 gelangt über die Abgasleitung 8 in die Abgasturbine 11, entspannt sich dort und treibt dabei den Verdichter 3 des Abgasturboladers 2 an. Der zweite Abgasstrom 20 wird zunächst im Abgaskühler 13 abgekühlt und anschliessend im Abgasverdichter 12 aufgeladen. Das Aufladen des zweiten Abgasstroms 20 erfolgt mit Hilfe des dritten Abgasstroms 21, der sich in der Turbine entspannt und dabei den Abgasverdichter 12 antreibt. Die Turbine und der Abgasverdichter 12 bilden daher einen Turbolader 22. Der nunmehr verdichtete zweite Abgasstrom 20 gelangt über die Abgasrückführleitung 16 erneut in die Brennkraftmaschine 1, wobei er zunächst mit der aufgeladenen Ladeluft 18 vermischt wird.

Demgegenüber sind bei der erfindungsgemässen Lösung in der zweiten Abgasleitung 9 zwei Abgasverdichter 12 angeordnet und mit jeweils einer Turbine zu zwei Turboladern 22 verbunden. Dabei sind die Abgasverdichter 12 parallel zueinander und die Turbinen in Reihe hintereinander angeordnet. Zudem ist in der Ladeluftleitung 4 ein Ladeluftkühler 5 ausgebildet, stromab dessen die Ladeluftleitung 4 sowie die Abgasrückführleitung 16 miteinander verbunden sind. In der dritten Abgasleitung 10 ist ein Steuerventil 15 angeordnet (Fig. 2).

Beim Betrieb dieser Vorrichtung wird die im Verdichter 3 aufgeladene Ladeluft 18 vor ihrer Einleitung in die Brennkraftmaschine 1 im Ladeluftkühler 5 gekühlt. Das grosse Volumen des Abgasstroms 20 der Brennkraftmaschine 1 wird auf beide Abgasverdichter 12 verteilt. Der nunmehr verdichtete, zweite Abgasstrom 20 gelangt über die Abgasrückführleitung 16 erneut in die Brennkraftmaschine 1, wobei er zunächst mit der aufgeladenen und gekühlten Ladeluft 18 vermischt wird. Die Druckverhältnisse in der zweiten Abgasleitung 9 sind dagegen unproblematisch, weil die Druckdifferenz zum Ladeluftleitungssystem 17 relativ gering ist. Durch die Anordnung der Turbinen in Reihe hintereinander wird die relativ grosse Druckdifferenz zwischen dem Abgasleitungssystem 7 und der Umgebungsluft problemlos ausgeglichen. Mit dem in der dritten Abgasleitung 10 angeordneten Steuerventil 15 lässt sich das zum Antrieb der Turbinen benötigte Volumen des Abgasstroms 21 einstellen.

Um die Temperatur des rückgeführten Abgasstroms 20 noch stärker zu senken, kann in der Abgasrückführleitung 16 ein weiterer Abgaskühler vor oder nach den Abgasverdichtern 12 angeordnet werden. Alternativ dazu ist es auch möglich. die Abgasrückführleitung 16 stromauf des Ladeluftkühlers 5 mit der Ladeluftleitung 4 zu verbinden (nicht dargestellt).

### Bezugszeichenliste

- 1: Brennkraftmaschine
- 2: Abgasturbolader
- 3: Verdichter
- 4: Ladeluftleitung
- 5: Ladeluftkühler
- 6: Abgas
- 7: Abgasleitungssystem
- 8: Abgasleitung, erste
- 9: Abgasleitung, zweite
- 10: Abgasleitung, dritte
- 11: Abgasturbine
- 12: Abgasverdichter
- 13: Abgaskühler
- 14: Antrieb
- 15: Steuerventil
- 16: Abgasrückführleitung
- 17: Ladeluftleitungssystem
- 18: Ladeluft
- 19: Abgasstrom, erster
- 20: Abgasstrom, zweiter
- 21: Abgasstrom, dritter
- 22: Turbolader

## Patentansprüche

1. Verfahren zur hochdruckseitigen Abgasrezirkulation einer turbo-aufgeladenen Brennkraftmaschine (1), bei welchem
a) verdichtete und gekühlte Ladeluft (18) in die Brennkraftmaschine (1) eingeleitet wird,
b) die Abgase (6) der Brennkraftmaschine (1) in mehrere Abgasströme aufgeteilt werden,
c) ein erster Abgasstrom (19) in einer Abgasturbine (11) entspannt wird und damit einen Verdichter (3) eines Abgasturboladers (2) antreibt,
d) ein zweiter Abgasstrom (20) zunächst gekühlt, danach verdichtet und schliesslich rezirkuliert, d.h. in die Brennkraftmaschine (1) eingeleitet wird,
e) ein dritter Abgasstrom (21) der Brennkraftmaschine (1) separat vom ersten Abgasstrom (19) entspannt wird und die Leistung zur Verdichtung des zweiten Abgasstroms (20) erbringt,
f) zumindest zwei Verdichtungs- bzw. Entspannungsvorgänge des zweiten bzw. des dritten Abgasstroms (20, 21) durchgeführt werden, wobei die Verdichtungsvorgänge parallel zueinander und die Entspannungsvorgänge in Reihe hintereinander ablaufen.

2. Vorrichtung zur hochdruckseitigen Abgasrezirkulation einer turbo-aufgeladenen Brennkraftmaschine (1), bei welcher
a) ein Verdichter (3) eines Abgasturboladers (2) über eine Ladeluftleitung (4) mit der Brennkraftmaschine (1) verbunden und in der Ladeluftleitung (4) ein Ladeluftkühler (5) angeordnet ist,
b) stromab der Brennkraftmaschine (1) ein sich verzweigendes Abgasleitungssystem (7) ausgebildet ist,
c) das Abgasleitungssystem (7) aus einer ersten, mit einer Abgasturbine (11) des Abgasturboladers (2) und einer zweiten, mit einem Abgaskühler (13) sowie einem Abgasverdichter (12) verbundenen Abgasleitung (8, 9) besteht,
d) der Abgasverdichter (12) einen Antrieb (14) aufweist und über eine Abgasrückführleitung (16) mit der Ladeluftleitung (4) verbunden ist,
e) als Antrieb (14) des Abgasverdichters (12) eine Turbine angeordnet ist und das Abgasleitungssystem (7) eine dritte, mit der Turbine des Abgasverdichters (12) verbundene Abgasleitung (10) aufweist,
f) in der zweiten Abgasleitung (9) zumindest zwei Abgasverdichter (12) angeordnet sind,
g) jeder Abgasverdichter (12) mit einer Turbine verbunden ist,
h) die Abgasverdichter (12) parallel zu- und die Turbinen in Reihe hintereinander angeordnet sind.

3. Vorrichtung nach Anspruch 2, dadurch gekennzeichnet, dass in der dritten Abgasleitung (10) ein Steuerventil (15) angeordnet ist.

## Claims

1. Method for high-pressure end exhaust gas recirculation on a turbocharged internal combustion engine (1), in which
a) compressed and cooled charge air (18) is introduced into the internal combustion engine (1),
b) the exhaust gases (6) of the internal combustion engine (1) are subdivided into a plurality of exhaust gas flows,
c) a first exhaust gas flow (19) is expanded in an exhaust gas turbine (11) and, by this means, drives a compressor (3) of an exhaust gas turbocharger (2),
d) a second exhaust gas flow (20) is initially cooled, subsequently compressed and finally recirculated, i.e. introduced into the internal combustion engine (1),
e) a third exhaust gas flow (21) of the internal combustion engine (1) is expanded separately from the first exhaust gas flow (19) and provides the power to compress the second exhaust gas flow (20),
f. at least two compression and expansion processes of the second and of the third exhaust gas flow (20, 21) are carried out, the compression processes taking place in parallel with one another and the expansion processes taking place in series one after the other.

2. Appliance for high-pressure end exhaust gas recirculation on a turbocharged internal combustion engine (1), in which
a) a compressor (3) of an exhaust gas turbocharger (2) is connected to the internal combustion engine (1) by means of a charge air duct (4) and a charge air cooler (5) is arranged in the charge air duct (4),
b) a branching exhaust gas duct system (7) is configured downstream of the internal combustion engine (1),
c) the exhaust gas duct system (7) consists of a first exhaust gas duct (8) connected to an exhaust gas turbine (11) of the exhaust gas turbocharger (2) and of a second exhaust gas duct (9) connected to an exhaust gas cooler (13) and an exhaust gas compressor (12),
d) the exhaust gas compressor (12) has a drive (14) and is connected to the charge air duct (4) by means of an exhaust gas recirculation duct (16),
e) a turbine is arranged as the drive (14) for the exhaust gas compressor (12) and the exhaust gas duct system (7) has a third exhaust gas duct (10) which is connected to the turbine.
f) at least two exhaust gas compressors (12) are arranged in the second exhaust gas duct (9),
g) each exhaust gas compressor (12) is connected to a turbine,
h) the exhaust gas compressors (12) are arranged in parallel with one another and the turbines are arranged in series one after the other.

3. Appliance according to Claim 2, characterized in that a control valve (15) is arranged in the third exhaust gas duct (10).

## Revendications

1. Procédé pour le recyclage, du côté de la haute pression, des gaz brûlés d'un moteur à combustion interne (1) suralimenté par un turbo-compresseur, dans lequel
a) de l'air comprimé et refroidi (18) est introduit dans le moteur à combustion interne (1),
b) les gaz brûlés (6) du moteur à combustion interne (1) sont divisés en plusieurs courants de gaz brûlés,
c) un premier courant de gaz brûlés (19) est détendu dans une turbine à gaz brûlés (11) et entraîne ainsi un compresseur (3) d'un turbo-compresseur de suralimentation à gaz brûlés (2),
d) un deuxième courant de gaz brûlés (20) est d'abord refroidi, ensuite comprimé et enfin recyclé, c'est-à-dire introduit dans le moteur à combustion interne (1),
e) un troisième courant de gaz brûlés (21) du moteur à combustion interne (1) est détendu séparément du premier courant de gaz brûlés (19) et fournit la puissance nécessaire pour la compression du deuxième courant de gaz brûlés (20),
f) on effectue au moins deux opérations de compression, respectivement de détente, du deuxième, respectivement du troisième, courant de gaz brûlés (20, 21), les opérations de compression se déroulant en parallèle l'une avec l'autre et les opérations de détente se déroulant en série l'une après l'autre.

2. Dispositif pour le recyclage, du côté de la haute pression, des gaz brûlés d'un moteur à combustion interne (1) suralimenté par un turbo-compresseur, dans lequel
a) un compresseur (3) d'un turbo-compresseur de suralimentation à gaz brûlés (2) est relié par une conduite d'air d'admission (4) au moteur à combustion interne (1) et un refroidisseur d'air d'admission (5) est disposé dans la conduite d'air d'admission (4),
b) en aval du moteur à combustion interne (1) est formé un circuit de gaz brûlés à plusieurs branches (7),
c) le circuit de gaz brûlés (7) se compose d'une première conduite de gaz brûlés (8) raccordée à une turbine à gaz brûlés (11) du turbo-compresseur de suralimentation à gaz brûlés (2) et d'une deuxième conduite de gaz brûlés (9) raccordée à un refroidisseur de gaz brûlés (13) ainsi qu'à un compresseur de gaz brûlés (12),
d) le compresseur de gaz brûlés (12) présente un moyen d'entraînement (14) et est raccordé à la conduite d'air d'admission (4) par une conduite de retour de gaz brûlés (16),
e) le moyen d'entraînement (14) du compresseur de gaz brûlés (12) est constitué par une turbine et le circuit de gaz brûlés (7) présente une troisième conduite de gaz brûlés (10) raccordée à la turbine du compresseur de gaz brûlés (12),
f) dans la deuxième conduite de gaz brûlés (9) sont disposés au moins deux compresseurs de gaz brûlés (12),
g) chaque compresseur de gaz brûlés (12) est raccordé à une turbine,
h) les compresseurs de gaz brûlés (12) sont montés en parallèle l'un avec l'autre et les turbines en série l'une après l'autre.

3. Dispositif suivant la revendication 2, caractérisé en ce qu'une soupape de réglage (15) est disposée dans la troisième conduite de gaz brûlés (10).
